# EUROPÄISCHE PATENTSCHRIFT

(11) **EP 4 403 381 B1**
(45) Veröffentlichungstag und Bekanntmachung des Hinweises auf die Patenterteilung: **03.12.2025**
(21) Anmeldenummer: 24150418.2
(22) Anmeldetag: 04.01.2024
(51) Int. Cl.: B60C 11/03, B60C 11/13

(54) **LAUFSTREIFEN FÜR EINEN FAHRZEUGREIFEN**
TREAD FOR A VEHICLE TYRE
BANDE DE ROULEMENT POUR UN PNEU DE VÉHICULE

(30) Priorität: 18.01.2023 DE 102023200378
(43) Veröffentlichungstag der Anmeldung: 24.07.2024
(73) Patentinhaber: Continental Reifen Deutschland GmbH, 30175 Hannover (DE)
(72) Erfinder: Heinhaupt, Torsten, 30175 Hannover (DE); Bauer, Claudia, 30175 Hannover (DE); Fuchs, Artur, 30175 Hannover (DE); Brockmann, Jürgen, 30175 Hannover (DE)
(74) Vertreter: Continental Corporation

(56) Entgegenhaltungen:
- EP-A1- 2 927 024
- EP-A1- 3 785 938
- WO-A1-2015/096963
- WO-A1-2017/212399
- WO-A1-2020/012277
- WO-A1-2020/012279
- WO-A1-2022/259085
- US-A1- 2020 130 418

## Beschreibung

Die Erfindung betrifft einen Laufstreifen für einen Fahrzeugreifen, wobei mehrere schräge Rillenabschnitte in dem Laufstreifen ausgebildet sind, wobei jeder der schrägen Rillenabschnitte von einem axial äußeren Ende zu einem näher an einem Reifenäquator gelegenen Ende in Umfangsrichtung nach vorn verläuft.

Solche Laufstreifen werden an Winterreifen und Reifen für den Ganzjahreseinsatz eingesetzt. Die oft in V-förmigen Mustern verlaufenden Rillen verwirklichen in einem entsprechenden Laufstreifen einen Kompromiss aus Entwässerungsfunktion, Trockenhandling sowie Eis- und Schneehandling. Im Stand der Technik gibt es einige Variationen des betroffenen Grundmusters. Beispielsweise beschreibt US 2022/0274444 A1 einen Reifen mit Schrägrillen, die alle von den Seiten des Profils bis zum Reifenäquator reichen. US 2022/0266634 A1 beschreibt einen Reifen mit Schrägrillen, die alle von den Seiten des Profils bis in die axiale Mitte, jedoch nicht bis zum Reifenäquator reichen. Ein gattungsgemäßer Laufstreifen ist aus der WO 2020/012277 A1 bekannt. Weitere Laufstreifen werden in WO 2020/012279 A1, WO 2022/259085 A1, US 2020/130418 A1, EP 3 785 938 A1, WO 2015/096963 A1, EP 2 927 024 A1 sowie WO 2017/212399 A1 beschrieben.

Wenn von den gegenüberliegenden Seiten eines Profils ausgehende Rillen in einer Umgebung des Reifenäquators miteinander verbunden sind, verbessert dies die Eigenschaften bei Nässe und Schnee. Wenn die Rillen hingegen zur Mitte hin als Sackrillen enden und um den Reifenäquator herum eine ununterbrochene Profilrippe verbleibt, verbessert dies die Bremseigenschaften und das Handling auf trockenem Boden.

Der Erfindung liegt die Aufgabe zugrunde, einen Laufstreifen zu schaffen, der einen Kompromiss zwischen ausreichender Steifigkeit in der Umgebung des Reifenäquators und genügend Negativvolumen verwirklicht, sodass sowohl gute Handling- und Bremseigenschaften als auch gute Nässe- und Wintereigenschaften gegeben sind.

Die gestellte Aufgabe wird erfindungsgemäß dadurch gelöst, dass wenigstens ein sein axial äußeres Ende auf einer ersten Seite des Reifenäquators aufweisender schräger Rillenabschnitt innerhalb einer Bodenaufstandsfläche in einen sein axial äußeres Ende auf einer zweiten Seite des Reifenäquators aufweisenden schrägen Rillenabschnitt mündet und wenigstens ein weiterer sein axial äußeres Ende der ersten Seite des Reifenäquators aufweisender schräger Rillenabschnitt sein näher an dem Reifenäquator gelegenes Ende innerhalb der Bodenaufstandsfläche aufweist und in keinen sein axial äußeres Ende auf der zweiten Seite des Reifenäquators aufweisenden schrägen Rillenabschnitt mündet.

Die Erfindung erkennt, dass die Aufgabe durch das Vorsehen einer Kombination durchgehender bzw. mit Rillen von der anderen Seite des Reifenäquators verbundener Rillen einerseits mit Sackrillen andererseits gelöst werden kann. Indem wenigstens ein sein axial äußeres Ende auf der ersten Seite des Reifenäquators aufweisender schräger Rillenabschnitt innerhalb der Bodenaufstandsfläche in einen sein axial äußeres Ende auf der zweiten Seite des Reifenäquators aufweisenden schrägen Rillenabschnitt mündet, kommen die damit verbundene Entwässerungskapazität und Wintereignung unabhängig von der Rotationsstellung des Reifens durchgängig zum Tragen. Indem wenigstens ein Sackrillenabschnitt in der Bodenaufstandsfläche vorgesehen ist, kann die mit den von dem Sackrillenabschnitt nicht durchbrochenen Profilabschnitten verbundene Stabilität unabhängig von der Rotationsstellung des Reifens bei der Aufnahme von Kräften zum Tragen kommen.

Sofern die Richtungsbezeichnungen axial, in Axialrichtung, radial, in Radialrichtung und in Umfangsrichtung verwendet werden, beziehen sich diese auf den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 360° Umdrehung des Fahrzeugreifens früher einen minimalen Abstand zum Fahrbahnuntergrund als eine in Umfangsrichtung hintere Position, wobei die in Umfangsrichtung hinteren Position weniger als 180° hinter der vorderen Position ihren minimalen Abstand zum Fahrbahnuntergrund durchläuft. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Fahrzeugreifens verlaufen. Die Basisfläche fällt zusammen mit jener glatten Oberfläche, welche der Fahrzeugreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner oder gleich einer maximalen Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein. Dort, wo beispielweise eine Rille durch den Laufstreifen des Fahrzeugreifens verläuft, verläuft die Basisfläche als imaginäre Fläche oberhalb der Rille weiter; dort wo beispielsweise eine Schneekante auf dem Laufstreifen angeordnet ist, verläuft die Basisfläche als imaginäre Fläche unter der radial hervorstehenden Rippe weiter.

Die Bodenaufstandsfläche entspricht dem statisch ermittelten Footprint bei einer Last von 70 % der maximalen Tragfähigkeit bei einem Innendruck von 85 %, ermittelt gemäß E.T.R.T.O.-Standards. In einer bevorzugten Ausführungsform hat die Bodenaufstandsfläche eine axiale Breite von etwa 180 mm. Das vor- und/oder nachstehend beschriebene Grundmuster lässt sich jedoch auch in geeigneter Weise für den Einsatz an größeren oder kleineren Reifen skalieren.

Zwei schräge Rillenabschnitte münden ineinander, wenn im Neuzustand des Reifens zwei beliebige Punkte aus den beiden Rillenabschnitten innerhalb der beiden Rillenabschnitte durch eine durchgehende Linie verbunden werden können, die nicht weniger als 1 mm unterhalb der Basisfläche verläuft. Beispielsweise könnte im Sinne des Anspruchs 1 immer noch von einer Mündung zwischen zwei Rillenabschnitten gesprochen werden, wenn der Rillengrund im Bereich der Mündung bis zu 1,5 mm unter die Basisfläche angehoben wäre. Es hat sich gezeigt, dass bei einer solchen Mündung, wenigstens während einer Einfahrphase, immer noch eine der Entwässerung und dem Schneegriff zuträgliche Verbindung zwischen den beiden Rillenabschnitten gegeben sein kann.

In einer bevorzugten Ausführungsform ist der Laufstreifen so eingerichtet, dass wenigstens ein sein axial äußeres Ende auf der zweiten Seite des Reifenäquators aufweisender schräger Rillenabschnitt sein näher an dem Reifenäquator gelegenes Ende innerhalb der Bodenaufstandsfläche aufweist und in keinen sein axial äußeres Ende auf der ersten Seite des Reifenäquators aufweisenden schrägen Rillenabschnitt mündet. Indem ein entsprechender Sackrillenabschnitt nicht nur von der ersten, sondern auch von der zweiten Seite ausgeht, wird die Symmetrie des Laufstreifens erhöht und - jenseits der durch den Sackrillenabschnitt nicht durchbrochenen Profilabschnitte - eine gute Entwässerung auch auf der zweiten Seite des Reifenäquators gewährleistet.

Vorzugsweise sind die näher an dem Reifenäquator gelegenen Enden aller schrägen Rillenabschnitte in einem ersten mittleren Abschnitt des Laufstreifens angeordnet, der eine axiale Breite von 5% bis 15%, vorzugsweise von 5% bis 12% der Breite der Bodenaufstandsfläche aufweist und den Reifenäquator einschließt. Der erste mittlere Abschnitt ist definiert durch seine axialen Grenzen, wobei die axialen Grenzen durch die axial äußersten der näher an dem Reifenäquator gelegenen Enden aller schrägen Rillenabschnitte definiert sind. Das Ende eines Rillenabschnitts ist auf einer Linie definiert, die in der Mitte der Rillenbreite, zwischen den Rändern des Rillenabschnitts am Rillengrund verläuft; ein axial äußerer Rand eines schrägen Rillenabschnitts kann somit knapp axial außerhalb des ersten mittleren Abschnitts des Laufstreifens enden. Vorzugsweise liegt der erste mittlere Abschnitt symmetrisch um den Reifenäquator oder ist mit bis zu 70% seiner axialen Breite auf der einen oder anderen Seite des Reifenäquators angeordnet.

Die schrägen Rillenabschnitte können mit ihren axial äußeren Enden axial außerhalb der Bodenaufstandsfläche enden oder innerhalb der Bodenaufstandsfläche in weitere Rillenabschnitte münden, die ihrerseits aus der Bodenaufstandsfläche herausführen. Auf diese Weise ist eine effiziente Entwässerung gewährleistet.

Der erfindungsgemäße Laufstreifen ist so eingerichtet, dass zwei von drei der ihr axial äußeres Ende auf der ersten Seite des Reifenäquators aufweisenden schrägen Rillenabschnitte in ihre axial äußeren Enden auf der zweiten Seite des Reifenäquators aufweisende schräge Rillenabschnitte münden. Zusätzlich kann gelten,
dass wenigstens einer von zwei und höchstens drei von vier, vorzugsweise zwei von drei der ihr axial äußeres Ende auf der zweiten Seite des Reifenäquators aufweisenden schrägen Rillenabschnitte in ihre axial äußeren Enden auf der ersten Seite des Reifenäquators aufweisende schräge Rillenabschnitte münden. Hierdurch wird ausreichend Negativvolumen für gute Nasseigenschaften geschaffen, ohne dass die Stabilität in der axialen Mitte des Laufstreifens durch zu viele Rillenmündungen übermäßig kompromittiert würde.

Gemäß einer besonders bevorzugten Ausführungsform schneidet jeder zweite bis jeder vierte, vorzugsweise jeder dritte sein axial äußeres Ende auf der ersten Seite des Reifenäquators aufweisende schräge Rillenabschnitt den Reifenäquator. Alternativ oder zusätzlich kann jeder zweite bis jeder vierte, vorzugsweise jeder dritte sein axial äußeres Ende auf der zweiten Seite des Reifenäquators aufweisende schräge Rillenabschnitt den Reifenäquator schneiden. Vorzugsweise sind die den Reifenäquator schneidenden Rillenabschnitte unter jenen Rillenabschnitten, die auch in die ihr axial äußeres Ende auf der jeweils anderen Seite des Reifenäquators aufweisenden schrägen Rillenabschnitte münden. Die Mündungen können die axialen Ränder des ersten mittleren Abschnitts des Laufstreifens definieren, während die Enden der Sackrillenabschnitte axial näher an dem Reifenäquator gelegen sein können. Mit einem oder mehreren der in diesem Absatz genannten Merkmale lassen sich die ineinander mündenden Rillenabschnitte und Sackrillenabschnitte besonders gut nebeneinander auf dem Laufstreifen unterbringen.

Vorzugsweise schneiden die den Reifenäquator schneidenden schrägen Rillenabschnitte den Reifenäquator bei voller Rillentiefe. Auf diese Weise sind am Reifenäquator über die gesamte Lebensdauer des Reifens optimale Entwässerungskapazität und Wintereignung gegeben.

Zwischen den schrägen Rillenabschnitten können Profilblöcke angeordnet sein, wobei ein näher an dem Reifenäquator gelegenes Ende eines sein axial äußeres Ende auf der ersten Seite des Reifenäquators aufweisenden schrägen Rillenabschnitts, der in keinen sein axial äußeres Ende auf der zweiten Seite des Reifenäquators aufweisenden schrägen Rillenabschnitt mündet, von weiteren schrägen Rillenabschnitten jeweils wenigstens eine Profilblockbreite entfernt ist. Alternativ oder zusätzlich kann ein näher an dem Reifenäquator gelegenes Ende eines sein axial äußeres Ende auf der zweiten Seite des Reifenäquators aufweisenden schrägen Rillenabschnitts, der in keinen sein axial äußeres Ende auf der ersten Seite des Reifenäquators aufweisenden schrägen Rillenabschnitt mündet, von weiteren schrägen Rillenabschnitten jeweils wenigstens eine Profilblockbreite entfernt sein. Mit anderen Worten können in dem Laufstreifen vorgesehenen Sackrillenabschnitte jeweils wenigstens eine Profilblockbreite entfernt von weiteren schrägen Rillenabschnitten enden. Auf diese Weise bestehen vorteilhaft große von Rillen ununterbrochene Abschnitte in dem Laufstreifen, um entsprechende Stabilität zu gewährleisten.

Ein Profilblock ist zwischen zwei im Wesentlichen parallel, also parallel oder mit einigen Grad Abweichung nebeneinander verlaufenden Rillenabschnitten definiert. Wenn einer der zwei nebeneinander verlaufenden Rillenabschnitte weiterläuft, wo der andere schon geendet hat, kann ausgehend von dem weiterlaufenden Rillenabschnitt eine virtuelle Profilblockbreite bis dorthin definiert werden, wo der bereits beendete Rillenabschnitt gemäß geeigneter Extrapolation weiterverlaufen würde. Beispielsweise können zwei in Umfangsrichtung gegeneinander verschobene, im Wesentlichen V-förmige Muster von Rillenabschnitten in dem Laufstreifen ausgebildet sein, wobei die Spitze der V-Formen in Umfangsrichtung jeweils nach vorn zeigt. Die in Umfangsrichtung weiter vorn angeordnete V-Form kann aus zwei ihre axial äußeren Enden auf gegenüberliegenden Seiten des Reifenäquators aufweisenden, ineinander mündenden schrägen Rillenabschnitten bestehen. Bei der in Umfangsrichtung weiter hinten angeordnete V-Form kann ein erster Arm der V-Form unterbrochen sein, wobei eine Extrapolation des den ersten Arm bildenden schrägen Rillenabschnitts zur Spitze der V-Form führen würde. Der zweite Arm der in Umfangsrichtung hinteren V-Form kann als Sackrillenabschnitt in der Spitze der V-Form enden und dementsprechend eine virtuelle Profilblockbreite vor demjenigen schrägen Rillenabschnitt aus der vorderen V-Form enden, der im Wesentlichen parallel zu dem ersten Arm der hinteren V-Form verläuft.

Es kann zu einem sein axial äußeres Ende auf der ersten Seite des Reifenäquators aufweisenden schrägen Rillenabschnitt, der in keinen sein axial äußeres Ende auf der zweiten Seite des Reifenäquators aufweisenden schrägen Rillenabschnitt mündet, ein von einem sein axial äußeres Ende auf der zweiten Seite des Reifenäquators aufweisenden schrägen Rillenabschnitt abzweigender erster Zweigrillenabschnitt in dem Laufstreifen ausgebildet sein. Hierbei kann sich der erste Zweigrillenabschnitt um 30% bis 80% einer Profilblockbreite in Richtung des näher an dem Reifenäquator gelegenen Endes des sein axial äußeres Ende auf der ersten Seite des Reifenäquators aufweisenden schrägen Rillenabschnitts erstrecken. Alternativ oder zusätzlich kann zu einem sein axial äußeres Ende auf der zweiten Seite des Reifenäquators aufweisenden schrägen Rillenabschnitt, der in keinen sein axial äußeres Ende auf der ersten Seite des Reifenäquators aufweisenden schrägen Rillenabschnitt mündet, ein von einem sein axial äußeres Ende auf der ersten Seite des Reifenäquators aufweisenden schrägen Rillenabschnitt abzweigender zweiter Zweigrillenabschnitt in dem Laufstreifen ausgebildet sein, wobei der zweite Zweigrillenabschnitt sich um 30% bis 80% einer Profilblockbreite in Richtung des näher an dem Reifenäquator gelegenen Endes des sein axial äußeres Ende auf der zweiten Seite des Reifenäquators aufweisenden schrägen Rillenabschnitts erstreckt.

Weiterhin kann mit dem näher an dem Reifenäquator gelegenen Ende desjenigen sein axial äußeres Ende auf der ersten Seite des Reifenäquators aufweisenden schrägen Rillenabschnitts, der in keinen sein axial äußeres Ende auf der zweiten Seite des Reifenäquators aufweisenden schrägen Rillenabschnitt mündet, ein dritter Zweigrillenabschnitt verbunden sein, wobei der dritte Zweigrillenabschnitt sich um 30% bis 80% einer Profilblockbreite in Richtung eines näher an dem Reifenäquator gelegenen Endes eines sein axial äußeres Ende auf der zweiten Seite des Reifenäquators aufweisenden schrägen Rillenabschnitts erstreckt. Alternativ oder zusätzlich kann mit dem näher an dem Reifenäquator gelegenen Ende desjenigen sein axial äußeres Ende auf der zweiten Seite des Reifenäquators aufweisenden schrägen Rillenabschnitts, der in keinen sein axial äußeres Ende auf der ersten Seite des Reifenäquators aufweisenden schrägen Rillenabschnitt mündet, ein vierter Zweigrillenabschnitt verbunden sein, wobei der vierte Zweigrillenabschnitt sich um 30% bis 80% einer Profilblockbreite in Richtung eines näher an dem Reifenäquator gelegenen Endes eines sein axial äußeres Ende auf der ersten Seite des Reifenäquators aufweisenden schrägen Rillenabschnitts erstreckt.

Die beschriebenen Zweigrillenabschnitte schaffen zusätzliches Negativvolumen zur Entwässerung und können sich weiterhin durch die damit geschaffenen zusätzlichen Kanten und Winkel insbesondere als Schneetaschen vorteilhaft auswirken.

Der Rillengrund kann in einem oder mehreren der Zweigrillenabschnitte gegenüber einem abseits des jeweiligen Zweigrillenabschnitts an den Zweigrillenabschnitt angrenzenden Rillengrund erhöht sein. Der Übergang zwischen den verschiedenen Niveaus des Rillengrundes erfolgt dann vorzugsweise abrupt und stufenförmig.

Weiterhin kann der Rillengrund an einer Mündung zwischen einem sein axial äußeres Ende auf der ersten Seite des Reifenäquators aufweisenden schrägen Rillenabschnitt und einem sein axial äußeres Ende auf der zweiten Seite des Reifenäquators aufweisenden schrägen Rillenabschnitt gegenüber einem abseits der Mündung an die Mündung angrenzenden Rillengrund erhöht sein. Ein Mündungsbereich kann sich mit seinem erhöhten Rillengrund über eine axiale Breite zwischen 5% und 15%, vorzugsweise zwischen 5% und 11% der Breite der Bodenaufstandsfläche erstrecken. Der Mündungsbereich kann sich asymmetrisch weiter in den einen als in den anderen einmündenden Rillenabschnitt erstrecken. Der Übergang zwischen den verschiedenen Niveaus des Rillengrundes erfolgt vorzugsweise abrupt und stufenförmig.

Der Rillengrund verläuft in den erhöhten Bereichen vorzugsweise wenigstens 1,5 mm und höchstens mit einer Tiefe von 60% der vollen Profiltiefe unter der Basisfläche des Laufstreifens. In einer bevorzugten Ausführungsform beträgt die volle Profiltiefe 7 mm.

Durch das Minimum von 1,5 mm bleibt das Negativvolumen in den Zweigrillenabschnitten und/oder in den Mündungen wenigstens für eine entsprechende Einfahrzeit erhalten. Durch ein Maximum von 60% der vollen Profiltiefe wird dem Laufstreifen andererseits durch den entsprechend angehobenen Rillengrund zusätzliche Stabilität verliehen.

Insgesamt sind die Bereiche erhöhten Rillengrundes vorzugsweise auf einen zweiten mittleren Abschnitt des Laufstreifens beschränkt, der sich über 8% bis 24%, vorzugsweise über 12% bis 20% der axialen Breite der Bodenaufstandsfläche erstreckt und den Reifenäquator einschließt. Je nachdem, ob mehr Stabilität oder bessere Entwässerungskapazität und Schneeperformance gewünscht werden, kann der zweite mittlere Abschnitt innerhalb des angegebenen Bereichs breiter oder schmaler gewählt werden. Vorzugsweise liegt der zweite mittlere Abschnitt symmetrisch um den Reifenäquator oder ist mit bis zu 70% seiner axialen Breite auf der einen oder anderen Seite des Reifenäquators angeordnet.

Als weiteres Profilmerkmal können an der Basisfläche parallel zu den schrägen Rillenabschnitten verlaufende Einschnitte in dem Laufstreifen ausgebildet sein. Weiterhin können weitere Einschnitte vorgesehen sein, welche die parallel zu den schrägen Rillenabschnitten verlaufenden Einschnitte schneiden. Durch die Einschnitte werden zusätzliche Kanten geschaffen, welche die Nässe- und -Wintereigenschaften des Laufstreifens positiv beeinflussen.

Gemäß einer bevorzugten Ausführungsform hat wenigstens einer der Einschnitte hierbei eine maximale Tiefe von 70% bis 100% der vollen Profiltiefe, einen Einschnittgrund und zwei Einschnittwände mit zumindest einer zu der Basisfläche beabstandeten lokalen Verkeilungsstruktur. Die Verkeilungsstruktur kann durch zwei einander gegenüberliegende, korrespondierende, durchgehend gekrümmte Wandabschnitte der Einschnittwände gebildet sein, wobei unstrukturierte Flächen der Einschnittwände an die durchgehend gekrümmten Wandabschnitte angrenzen. Die Verkeilungsstruktur kann kreissegmentförmig, insbesondere halbkreisförmig, ausgeführt sein und sich aus einer kuppelförmig ausgebauchten, inneren Strukturzone und einer diese U-förmig umlaufenden, entgegengesetzt zur inneren Strukturzone ausgebauchten, äußeren Strukturzone mit zur Basisfläche weisenden U-Schenkeln zusammensetzen, sodass der durchgehend gekrümmte Wandabschnitt der einen Einschnittwand einen U-förmigen Vorsprung und der durchgehend gekrümmte Wandabschnitt der anderen Einschnittwand einen in den U-förmigen Vorsprung hineinragenden kuppelförmigen Vorsprung mitbegrenzt.

Die Verkeilungsstruktur weist in der Längserstreckung des Einschnittes eine besonders gute Verkeilungswirkung auf, wodurch die Profilblöcke besonders wirkungsvoll stabilisiert und in der Folge die Kraftübertragung bei Lenk-, Brems- und Traktionsvorgängen verbessert ist. Mit fortschreitendem Laufstreifenabrieb tritt die Verkeilungsstruktur mehr in Richtung der Basisfläche bzw. die Basisfläche rückt radial weiter in den Laufstreifen hinein. Dabei werden an der Verkeilungsstruktur ausgebildete, ausgeprägt gewellt verlaufende Griffkanten nahe bei oder an der Basisfläche zur Verfügung gestellt, welche eine hohe abgewickelte Kantenlänge aufweisen und den mit zunehmendem Laufstreifenabrieb abnehmenden Traktionseigenschaften auf Schnee wirkungsvoll entgegenwirken, wodurch die Traktionseigenschaften auf hohem Niveau gehalten werden. Weiterhin verbessert die nun bis zur Basisfläche reichende U-förmig umlaufende äußere Strukturzone bedingt durch ihre U-Form beim Fahren auf nasser Fahrbahn die Entwässerung der Außenfläche der Profilpositive, was für die Nassgriffeigenschaften von Vorteil ist.

Die Verkeilungsstruktur zeigt daher einen doppelten Effekt, verbessert nämlich zum einen bei neuen bzw. wenig abgeriebenen Laufstreifen die Kraftübertragung auf den Untergrund und trägt zum anderen bei entsprechend abgeriebenem Laufstreifen zur Aufrechterhaltung einer guten Schnee- und Nässeperformance bei. Dies kann insbesondere im Zusammenspiel mit den erhöhten Rillengründen bei den Mündungen und/oder Zweigrillenabschnitten von großem Vorteil sein, weil entsprechend ausgestaltete Mündungen und/oder Zweigrillenabschnitte im Gegenzug eher bei neuen bzw. wenig abgeriebenen Laufstreifen zu einer guten Schnee- und Nässeperformance beitragen und in Zuständen größeren Abriebs, wegen des dann bei der Basisfläche liegenden erhöhten Rillengrunds, zu mehr Stabilität beitragen. Die gegenteiligen Entwicklungen in der Wirkung der Einschnitte bzw. der erhöhten Rillengründe können sich daher ausgleichen und dazu beitragen, dass sowohl Stabilität als auch Schnee- und Nässeperformance über die gesamte Lebensdauer des Laufstreifens auf einem hohen Niveau gehalten werden.

Weiterhin können wenigstens zwei in Umfangsrichtung benachbarte, ihre axial äußeren Enden auf der ersten Seite des Reifenäquators aufweisende schräge Rillenabschnitte durch wenigstens eine erste Verbindungsrille verbunden sein. Alternativ oder zusätzlich können wenigstens zwei in Umfangsrichtung benachbarte, ihre axial äußeren Enden auf der zweiten Seite des Reifenäquators aufweisende schräge Rillenabschnitte durch wenigstens eine zweite Verbindungsrille verbunden sein. Dies verbessert zum einen die Entwässerungsfunktion in dem Laufstreifen. Zum anderen kann gezielt eine Entkopplung durch die Verbindungsrille getrennter axialer Profilblöcke erreicht werden, wodurch das Abriebbild verbessert werden kann.

Die Erfindung betrifft außerdem einen Fahrzeugreifen mit vor- und /oder nachstehend beschriebenem Laufstreifen. Der Fahrzeugreifen wird vorzugsweise im Lichte der vor- und/oder nachstehenden Beschreibung laufrichtungsgebunden eingesetzt und ist insbesondere für den Ganzjahreseinsatz vorgesehen. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine Draufsicht auf eine Teilabwicklung einer Ausführungsform des erfindungsgemäßen Laufstreifens,
Figur 2 schematisch einen Ausschnitt aus Figur 1 mit alternativen erläuternden Einzeichnungen,
Figur 3 schematisch eine Schnittansicht entlang des Reifenäquators in dem in den Figuren 1 und 2 dargestellten Abschnitt des Laufstreifens,
Figur 4 schematisch und ausschnittsweise eine perspektivische Ansicht eines Lamellenblechs zur Herstellung von Einschnitten gemäß einer Ausführungsform des erfindungsgemäßen Laufstreifens,
Figur 5 schematisch und ausschnittsweise eine seitliche Ansicht des in Figur 4 gezeigten Lamellenblechs,
Figur 6 schematisch eine Schnittansicht eines Einschnitts, korrespondierend zu der an dem Lamellenblech aus Figur 5 markierten Position VI-VI im Bereich einer unstrukturierten Fläche,
Figur 7 schematisch eine Schnittansicht eines Einschnitts, korrespondierend zu der an dem Lamellenblech aus Figur 5 markierten Position VII-VII im Bereich einer Verkeilungsstruktur.

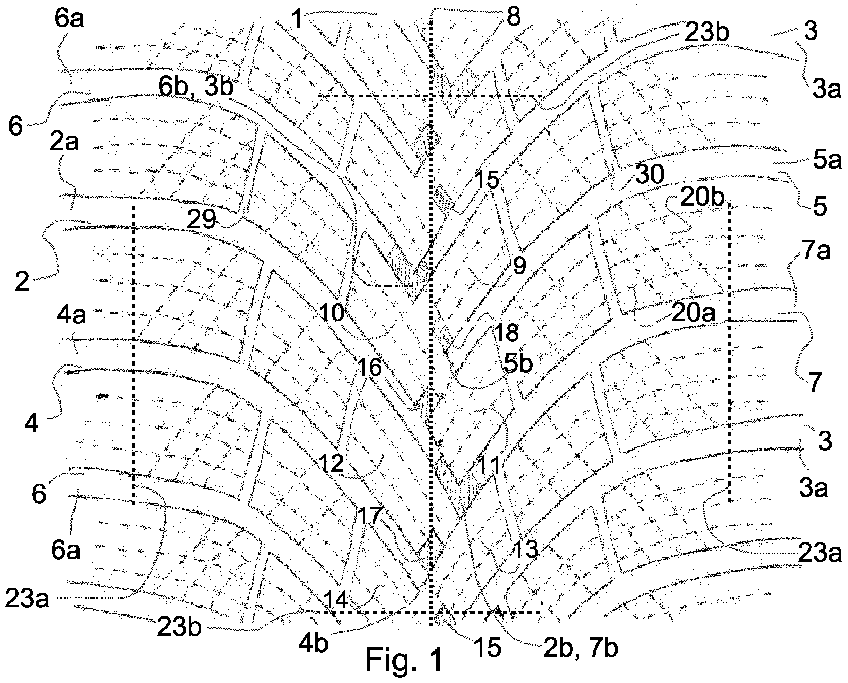

Figur 1 zeigt eine Draufsicht auf eine Teilabwicklung einer Ausführungsform des erfindungsgemäßen Laufstreifens 1. Die Umfangsrichtung ist in der Zeichnungsebene von oben nach unten, die Querrichtung von links nach rechts dargestellt. Der Reifenäquator 8 ist als gestrichelte Linie in der Mitte der Abbildung markiert. In dem Laufstreifen sind schräge Rillenabschnitte 2, 3, 4, 5, 6, 7 ausgebildet, die zusammen V-förmige Muster ergeben, wobei die V-Formen mit ihren Spitzen jeweils in Umfangsrichtung nach vorn zeigen. In dem abgebildeten Abschnitt des Laufstreifens sind vollständig zwei ihre axial äußeren Enden 2a, 6a auf einer ersten Seite des Reifenäquators 8 aufweisende schräge Rillenabschnitte 2, 6 zu sehen, die in ihre axial äußeren Enden 3a, 7a auf einer zweiten Seite des Reifenäquators 8 aufweisende schräge Rillenabschnitte 3, 7 münden. Weiterhin ist vollständig ein sein axial äußeres Ende 4a auf der ersten Seite des Reifenäquators 8 aufweisender schräger Rillenabschnitt 4 zu sehen, der mit seinem näher an dem Reifenäquator gelegenen Ende 4b in keinen sein axial äußeres Ende auf der zweiten Seite der Reifenäquatorlinie 8 aufweisenden schrägen Rillenabschnitt mündet. Bei dem Rillenabschnitt 4 handelt es sich mit anderen Worten um eine von der ersten Seite ausgehende und in der Umgebung des Reifenäquators 8 auslaufende Sackrille 4. In ähnlicher Weise ist in Figur 1 vollständig eine von der zweiten Seite ausgehende und in der Umgebung des Reifenäquators 8 auslaufende Sackrille 5 zu sehen. Die genannten Rillenabschnitte 2, 3, 4, 5, 6, 7 weisen ihre näher an dem Reifenäquator 8 gelegenen Enden 2b, 3b, 4b, 5b, 6b, 7b alle innerhalb einer Bodenaufstandsfläche 23 auf, deren axiale Ränder 23a und Ränder 23b in Umfangsrichtung in Figur 1 schematisch als gestrichelte Linien angedeutet sind.

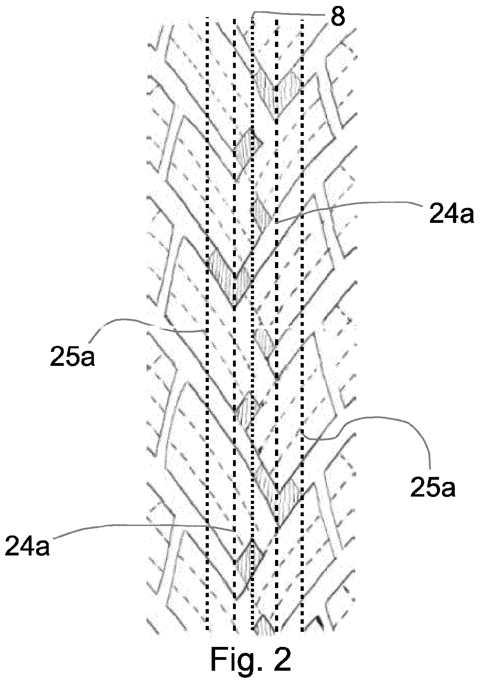

Wie Figur 1 grundsätzlich zu entnehmen und in Figur 2 explizit markiert, sind die näher an dem Reifenäquator 8 gelegenen Enden 2b, 3b, 4b, 5b, 6b, 7b der schrägen Rillenabschnitte 2, 3, 4, 5, 6, 7 in einem ersten mittleren Abschnitt 24 angeordnet, dessen axiale Grenzen 24a in Figur 2 als gestrichelte Linien eingezeichnet sind.

Erfindungsgemäß münden in dem Laufstreifen 1 zwei von drei Rillenabschnitte 2, 6 mit axial äußerem Ende 2a, 6a auf der ersten Seite in Rillenabschnitte 3, 7 mit axial äußerem Ende 3a, 7a auf der zweiten Seite. Weiterhin münden zwei von drei Rillenabschnitte 3, 7 mit axial äußerem Ende 3a, 7a auf der zweiten Seite in Rillenabschnitte 2, 6 mit axial äußerem Ende 2a, 6a auf der ersten Seite. Dementsprechend handelt es sich andersherum bei jedem dritten schrägen Rillenabschnitt 4 mit axial äußerem Ende 4a auf der ersten Seite und jedem dritten schrägen Rillenabschnitt 5 mit axial äußerem Ende 5a auf der zweiten Seite um eine Sackrille 4, 5.

Weiterhin schneidet jeder dritte sein axial äußeres Ende 2a auf der ersten Seite des Reifenäquators 8 aufweisende schräge Rillenabschnitt 2 den Reifenäquator 8 und jeder dritte sein axial äußeres Ende 3a auf der zweiten Seite des Reifenäquators 8 aufweisende schräge Rillenabschnitt 3 den Reifenäquator 8. Insbesondere schneiden die genannten schrägen Rillenabschnitte 2, 3 den Reifenäquator 8 bei voller Profiltiefe, wobei die volle Profiltiefe in allen in Figur 1 nicht schraffierten Bereichen der Rillenabschnitte 2, 3, 4, 5, 6, 7 gegeben ist.

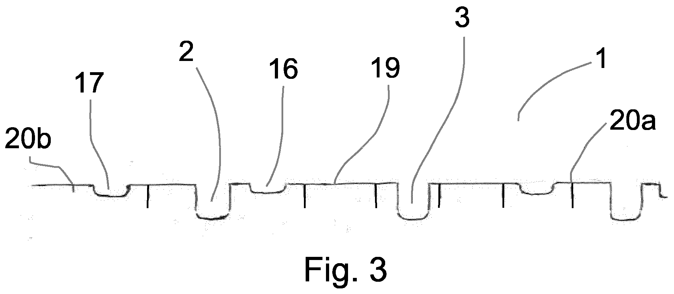

Wie an den schraffierten Bereichen in den Figuren 1 und 2 erkennbar, weisen die Mündungen je zweier von gegenüberliegenden Seiten ausgehender schräger Rillenabschnitte 2, 3, 6, 7 einen erhöhten Rillengrund auf. Ebenso sind in Figur 1 gekennzeichnete Zweigrillenabschnitte 15, 16, 17, 18 mit einem erhöhten Rillengrund ausgebildet. Wie in Figur 2 durch gestrichelte Linien markiert, erstrecken sich die Bereiche erhöhten Rillengrunds über einen zweiten mittleren Abschnitt 25 mit axialen Grenzen 25a. Figur 3 zeigt eine Schnittansicht des Laufstreifens entlang des Reifenäquators 8 in dem in Figuren 1 und 2 gezeigten Umfangsabschnitt. Die Bereiche erhöhten Rillengrunds, darunter der in Figur 3 gekennzeichnete dritte Zweigrillenabschnitt 17 und der zweite Zweigrillenabschnitt 16, liegen mit einer Tiefe von etwa 25% der vollen Profiltiefe unterhalb der Basisfläche 19 des Laufstreifens 1.

Zwischen den schrägen Rillenabschnitten 2, 3, 4, 5, 6, 7 sind Profilblöcke 9, 10, 11, 12, 13, 14 angeordnet. Die von schrägen Rillenabschnitten 2, 3, 4, 5 abzweigenden Zweigrillenabschnitte 15, 16, 17, 18 erstrecken sich jeweils etwa 50% einer Profilblockbreite in Richtung eines axial inneren Endes 4b, 5b, 6b, 7b eines jeweils anderen schrägen Rillenabschnitts 4, 5, 6, 7. Hierbei verläuft der erste Zweigrillenabschnitt 15 deckungsgleich mit einem Abschnitt einer Extrapolation des schrägen Rillenabschnitts 4, die virtuell über dessen axial inneres Ende 4b hinausgeht. Für die Extrapolation können Steigung, Krümmung und/oder weitere den Verlauf des schrägen Rillenabschnitts 4 beschreibende Parameter in geeigneter Weise mathematisch erfasst werden, davon ausgehend kann in geeigneter Weise ein virtueller Verlauf des Rillenabschnitts 4 jenseits dessen Ende 4b bestimmt werden. In ähnlicher Weise verläuft der zweite Zweigrillenabschnitt 16 deckungsgleich mit einem Abschnitt einer Extrapolation des schrägen Rillenabschnitts 5. Der dritte Zweigrillenabschnitt 17 verläuft deckungsgleich mit einem Abschnitt einer Extrapolation des schrägen Rillenabschnitts 7. Der vierte Zweigrillenabschnitt 18 verläuft deckungsgleich mit einem Abschnitt einer Extrapolation des schrägen Rillenabschnitts 6.

In den Draufsichten aus Figur 1 und Figur 2 als geschwungene gestrichelte Linien erkennbar, sind Einschnitte 20 in dem Laufstreifen ausgebildet. Hierunter sind parallel zu den schrägen Rillenabschnitten 2, 3, 4, 5, 6, 7 verlaufende Einschnitte 20a. Zusätzlich sind weitere Einschnitte 20b in dem Laufstreifen vorgesehen, welche die parallel zu den schrägen Rillenabschnitten 2, 3, 4, 5, 6, 7 verlaufenden Einschnitte 20a in Winkeln von ungefähr 90° kreuzen. Diese weiteren Einschnitte 20b sind im Vergleich zu den parallel zu den schrägen Rillenabschnitten 2, 3, 4, 5, 6, 7 verlaufenden Einschnitten 20a weniger tief. Wie der Schnittansicht aus Figur 3 zu entnehmen, erstrecken sich die parallel zu den schrägen Rillenabschnitten 2, 3, 4, 5, 6, 7 verlaufenden Einschnitten 20a etwas tiefer unterhalb der Basisfläche 19 als die Zweigrillenabschnitte 15, 16, 17, 18 und als die in Figur 3 nicht gezeigten Rillenmündungen mit erhöhtem Rillengrund.

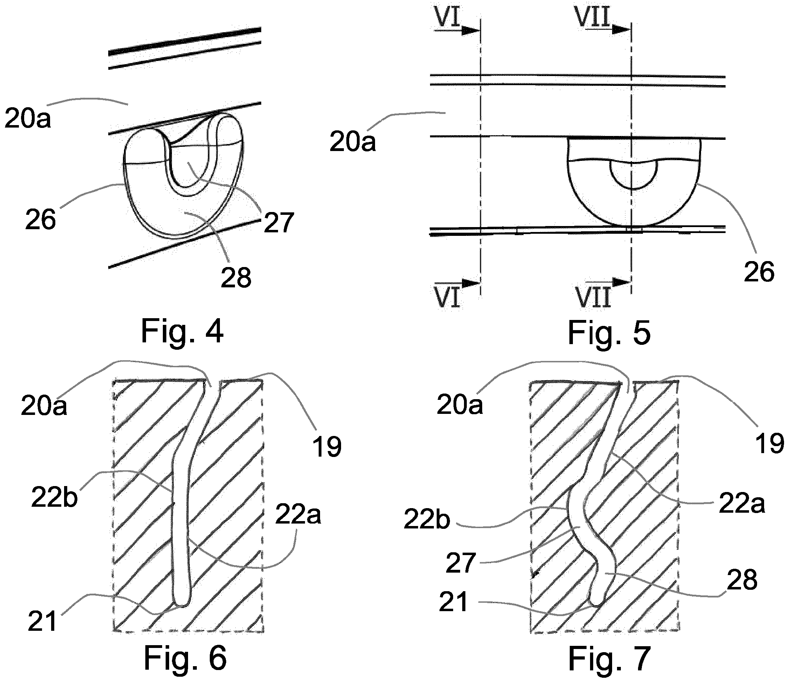

Die parallel zu den schrägen Rillenabschnitten 2, 3, 4, 5, 6, 7 verlaufenden Einschnitte 20a sind gemäß der in den Figuren 4 bis 7 gezeigten Ausführungsform mit Verkeilungsstrukturen 26 versehen, die nachfolgend näher beschrieben werden: Die Figuren 4 und 5 zeigen einen Ausschnitt eines Lamellenblechs zur Herstellung eines Einschnitts 20a. Das gezeigten Lamellenblech 20a und dessen Strukturen 26, 27, 28 werden in den Figuren 4 und 5 mit den gleichen Referenzzeichen bezeichnet wie der dazu korrespondierende Einschnitt 20a und dessen Strukturen 27, 28 in den Figuren 6 und 7. Eine Verkeilungsstruktur 26 ist in einem von der Basisfläche 19 beabstandeten Bereich des Einschnitts 20a bzw. des Lamellenblechs angeordnet. Die Verkeilungsstruktur 26 ist halbkreisförmig ausgeführt und setzt sich aus einer kuppelförmig ausgebauchten, inneren Strukturzone 27 und einer diese U-förmig umlaufenden, entgegengesetzt zur inneren Strukturzone ausgebauchten, äußeren Strukturzone 28 mit zur Basisfläche 19 weisenden U-Schenkeln zusammen. Die Verkeilungsstruktur 26 wird durch zwei einander gegenüberliegende, korrespondierende, durchgehend gekrümmte Wandabschnitte der Einschnittwände 22a, 22b gebildet, während unstrukturierte Flächen der Einschnittwände 22a, 22b an die durchgehend gekrümmten Wandabschnitte angrenzen. Ein Schnitt senkrecht zu einer unstrukturierten Fläche eines Einschnitts ist in Figur 6 gezeigt. Ein Schnitt durch die gekrümmten Wandabschnitte bei der Verkeilungsstruktur 26 ist in Figur 7 gezeigt. Wie an den Figuren 6 und 7 erkennbar, hat ein Einschnitt 20a einen Einschnittgrund 21 und zwei Einschnittwände 22a, 22b. Gemäß Figur 7 ist in dem durchgehend gekrümmten Wandabschnitt der einen Einschnittwand 22a die U-förmige äußere Strukturzone 28 als Vorsprung und in dem durchgehend gekrümmten Wandabschnitt der anderen Einschnittwand 22b die in den U-förmigen Vorsprung 28 hineinragende kuppelförmige innere Strukturzone 27 definiert.

Weiterhin sind gemäß der in Figur 1 gezeigten Ausführungsform in Umfangsrichtung benachbarte, ihre axial äußeren Enden 2a, 4a, 6a auf der ersten Seite des Reifenäquators 8 aufweisende schräge Rillenabschnitte 2, 4, 6 durch erste Verbindungsrillen 29 miteinander verbunden. Gleichermaßen sind in Umfangsrichtung benachbarte, ihre axial äußeren Enden 3a, 5a, 7a auf der zweiten Seite des Reifenäquators 8 aufweisende schräge Rillenabschnitte 3, 5, 7 durch zweite Verbindungsrillen 30 miteinander verbunden. Der Laufstreifen wird auf diese Weise in jeweils zwei axial äußere und axial halbmittige Profilbänder sowie ein zentrales Profilband unterteilt.

### Bezugszeichenliste

- 1: Laufstreifen
- 2: schräger Rillenabschnitt
- 3: schräger Rillenabschnitt
- 4: schräger Rillenabschnitt
- 5: schräger Rillenabschnitt
- 6: schräger Rillenabschnitt
- 7: schräger Rillenabschnitt
- 2a: axial äußeres Ende (des Rillenabschnitts)
- 3a: axial äußeres Ende (des Rillenabschnitts)
- 4a: axial äußeres Ende (des Rillenabschnitts)
- 5a: axial äußeres Ende (des Rillenabschnitts)
- 6a: axial äußeres Ende (des Rillenabschnitts)
- 7a: axial äußeres Ende (des Rillenabschnitts)
- 2b: näher am Reifenäquator gelegenes Ende (des Rillenabschnitts)
- 3b: näher am Reifenäquator gelegenes Ende Rillenabschnitts)
- 4b: näher am Reifenäquator gelegenes Ende (des Rillenabschnitts)
- 5b: (des näher am Reifenäquator gelegenes Ende (des Rillenabschnitts)
- 6b: näher am Reifenäquator gelegenes Ende (des Rillenabschnitts)
- 7b: näher am Reifenäquator gelegenes Ende (des Rillenabschnitts)
- 8: Reifenäquator
- 9: Profilblock
- 10: Profilblock
- 11: Profilblock
- 12: Profilblock
- 13: Verschiebung
- 14: Profilblock
- 15: erster Zweigrillenabschnitt
- 16: zweiter Zweigrillenabschnitt
- 17: dritter Zweigrillenabschnitt
- 18: vierter Zweigrillenabschnitt
- 19: Basisfläche
- 20: Einschnitt
- 20a: parallel zu schrägen Rillenabschnitten verlaufender Einschnitt
- 20b 20a: schneidender Einschnitt
- 21: Einschnittgrund
- 22a: (die eine) Einschnittwand
- 22b: (die andere) Einschnittwand
- 23: Bodenaufstandsfläche
- 23a: axialer Rand der Bodenaufstandsfläche
- 23b: Rand in Umfangsrichtung der Bodenaufstandsfläche
- 24: erster mittlerer Abschnitt
- 24a: axiale Grenzen des ersten mittleren Abschnitts
- 25: maximaler Anstiegswinkel
- 25a: axiale Grenzen des zweiten mittleren Abschnitts
- 26: Verkeilungsstruktur
- 27: innere Strukturzone
- 28: äußere Strukturzone
- 29: erste Verbindungsrille
- 30: zweite Verbindungsrille

## Patentansprüche

1. Laufstreifen (1) für einen Fahrzeugreifen, wobei mehrere schräge Rillenabschnitte (2, 3, 4, 5, 6, 7) in dem Laufstreifen (1) ausgebildet sind, wobei jeder der schrägen Rillenabschnitte (2, 3, 4, 5, 6, 7) von einem axial äußeren Ende (2a, 3a, 4a, 5a, 6a, 7a) zu einem näher an einem Reifenäquator (8) gelegenen Ende (2b, 3b, 4b, 5b, 6b, 7b) in Umfangsrichtung nach vorn verläuft, wobei wenigstens ein sein axial äußeres Ende (2a, 6a) auf einer ersten Seite des Reifenäquators (8) aufweisender schräger Rillenabschnitt (2, 6) innerhalb einer Bodenaufstandsfläche (23) in einen sein axial äußeres Ende (3a, 7a) auf einer zweiten Seite des Reifenäquators (8) aufweisenden schrägen Rillenabschnitt (3, 7) mündet und wenigstens ein weiterer sein axial äußeres Ende (4a) auf der ersten Seite des Reifenäquators (8) aufweisender schräger Rillenabschnitt (4) sein näher an dem Reifenäquator gelegenes Ende (4b) innerhalb der Bodenaufstandsfläche (23) aufweist und in keinen sein axial äußeres Ende auf der zweiten Seite des Reifenäquators (8) aufweisenden schrägen Rillenabschnitt mündet
**dadurch gekennzeichnet,**
**dass** zwei von drei der ihr axial äußeres Ende (2a, 4a, 6a) auf der ersten Seite des Reifenäquators (8) aufweisenden schrägen Rillenabschnitte (2, 4, 6) in ihre axial äußeren Enden (3a, 7a) auf der zweiten Seite des Reifenäquators (8) aufweisende schräge Rillenabschnitte (3, 7) münden.

2. Laufstreifen (1) gemäß Anspruch 1, **dadurch gekennzeichnet, dass** wenigstens ein sein axial äußeres Ende (5a) auf der zweiten Seite des Reifenäquators (8) aufweisender schräger Rillenabschnitt (5) sein näher an dem Reifenäquator gelegenes Ende (4b) innerhalb der Bodenaufstandsfläche (23) aufweist und in keinen sein axial äußeres Ende auf der ersten Seite des Reifenäquators (8) aufweisenden schrägen Rillenabschnitt mündet.

3. Laufstreifen (1) gemäß einem der Ansprüche 1 oder 2, **dadurch gekennzeichnet, dass** ein näher an dem Reifenäquator (8) gelegenes Ende (2b, 3b, 4b, 5b, 6b, 7b) eines jeden schrägen Rillenabschnittes (2, 3, 4, 5, 6, 7) in einem ersten mittleren Abschnitt (24) des Laufstreifens (1) angeordnet ist, der eine axiale Breite von 5% bis 15%, vorzugsweise von 5% bis 12% der Breite der Bodenaufstandsfläche (23) aufweist und den Reifenäquator (8) einschließt.

4. Laufstreifen (1) gemäß einem der Ansprüche 1 bis 3, **dadurch gekennzeichnet, dass** wenigstens einer von zwei und höchstens drei von vier, vorzugsweise zwei von drei der ihr axial äußeres Ende (3a, 5a, 7a) auf der zweiten Seite des Reifenäquators (8) aufweisenden schrägen Rillenabschnitte (3, 5, 7) in ihre axial äußeren Enden (2a, 6a) auf der ersten Seite des Reifenäquators (8) aufweisende schräge Rillenabschnitte (2, 6) münden.

5. Laufstreifen (1) gemäß einem der Ansprüche 1 bis 4, **dadurch gekennzeichnet, dass** jeder zweite bis jeder vierte, vorzugsweise jeder dritte sein axial äußeres Ende (2a) auf der ersten Seite des Reifenäquators (8) aufweisende schräge Rillenabschnitt (2) den Reifenäquator (8) schneidet und/oder dass jeder zweite bis jeder vierte, vorzugsweise jeder dritte sein axial äußeres Ende (3a) auf der zweiten Seite des Reifenäquators (8) aufweisende schräge Rillenabschnitt (3) den Reifenäquator (8) schneidet.

6. Laufstreifen (1) gemäß Anspruch 5, **dadurch gekennzeichnet, dass** die den Reifenäquator schneidenden schrägen Rillenabschnitte (2, 3) den Reifenäquator (8) bei voller Profiltiefe schneiden.

7. Laufstreifen (1) gemäß einem der Ansprüche 1 bis 6, **dadurch gekennzeichnet, dass** zwischen den schrägen Rillenabschnitten (2, 3, 4, 5, 6, 7) Profilblöcke (9, 10, 11, 12, 13, 14) angeordnet sind, wobei ein näher an dem Reifenäquator (8) gelegenes Ende (4b) eines sein axial äußeres Ende (4a) auf der ersten Seite des Reifenäquators (8) aufweisenden schrägen Rillenabschnitts (4), der in keinen sein axial äußeres Ende auf der zweiten Seite des Reifenäquators (8) aufweisenden schrägen Rillenabschnitt mündet, von weiteren schrägen Rillenabschnitten (2, 3, 6, 7) jeweils wenigstens eine Profilblockbreite entfernt ist und/oder wobei ein näher an dem Reifenäquator (8) gelegenes Ende (5b) eines sein axial äußeres Ende (5a) auf der zweiten Seite des Reifenäquators (8) aufweisenden schrägen Rillenabschnitts (5), der in keinen sein axial äußeres Ende auf der ersten Seite des Reifenäquators (8) aufweisenden schrägen Rillenabschnitt mündet, von weiteren schrägen Rillenabschnitten (2, 3, 6, 7) jeweils wenigstens eine Profilblockbreite entfernt ist.

8. Laufstreifen (1) gemäß Anspruch 7, **dadurch gekennzeichnet, dass** zu dem sein axial äußeres Ende (4a) auf der ersten Seite des Reifenäquators (8) aufweisenden schrägen Rillenabschnitt (4), der in keinen sein axial äußeres Ende auf der zweiten Seite des Reifenäquators (8) aufweisenden schrägen Rillenabschnitt mündet, ein von einem sein axial äußeres Ende (3a) auf der zweiten Seite des Reifenäquators (8) aufweisenden schrägen Rillenabschnitt (3) abzweigender erster Zweigrillenabschnitt (15) in dem Laufstreifen (1) ausgebildet ist, wobei der erste Zweigrillenabschnitt (15) sich um 30% bis 80% einer Profilblockbreite in Richtung des näher an dem Reifenäquator (8) gelegenen Endes (4b) des sein axial äußeres Ende (4a) auf der ersten Seite des Reifenäquators (8) aufweisenden schrägen Rillenabschnitts (4) erstreckt und/oder dass zu dem sein axial äußeres Ende (5a) auf der zweiten Seite des Reifenäquators (8) aufweisenden schrägen Rillenabschnitt (5), der in keinen sein axial äußeres Ende auf der ersten Seite des Reifenäquators (8) aufweisenden schrägen Rillenabschnitt mündet, ein von einem sein axial äußeres Ende (2a) auf der ersten Seite des Reifenäquators (8) aufweisenden schrägen Rillenabschnitt (2) abzweigender zweiter Zweigrillenabschnitt (16) in dem Laufstreifen (1) ausgebildet ist, wobei der zweite Zweigrillenabschnitt (16) sich um 30% bis 80% einer Profilblockbreite in Richtung des näher an dem Reifenäquator (8) gelegenen Endes (5b) des sein axial äußeres Ende (5a) auf der zweiten Seite des Reifenäquators (8) aufweisenden schrägen Rillenabschnitts (5) erstreckt.

9. Laufstreifen (1) gemäß einem der Ansprüche 7 oder 8, **dadurch gekennzeichnet, dass** mit dem näher an dem Reifenäquator (8) gelegenen Ende (4b) desjenigen sein axial äußeres Ende (4a) auf der ersten Seite des Reifenäquators aufweisenden schrägen Rillenabschnitts (4), der in keinen sein axial äußeres Ende auf der zweiten Seite des Reifenäquators (8) aufweisenden schrägen Rillenabschnitt mündet, ein dritter Zweigrillenabschnitt (17) verbunden ist, wobei der dritte Zweigrillenabschnitt (17) sich um 30% bis 80% einer Profilblockbreite in Richtung eines näher an dem Reifenäquator gelegenen Endes (7b) eines sein axial äußeres Ende (7a) auf der zweiten Seite des Reifenäquators aufweisenden schrägen Rillenabschnitts (7) erstreckt und/oder dass mit dem näher an dem Reifenäquator (8) gelegenen Ende (5b) desjenigen sein axial äußeres Ende (5a) auf der zweiten Seite des Reifenäquators (8) aufweisenden schrägen Rillenabschnitts (5), der in keinen sein axial äußeres Ende auf der ersten Seite des Reifenäquators (8) aufweisenden schrägen Rillenabschnitt mündet, ein vierter Zweigrillenabschnitt (18) verbunden ist, wobei der vierte Zweigrillenabschnitt (18) sich um 30% bis 80% einer Profilblockbreite in Richtung eines näher an dem Reifenäquator (8) gelegenen Endes (6b) eines sein axial äußeres Ende (6a) auf der ersten Seite des Reifenäquators (8) aufweisenden schrägen Rillenabschnitts (6) erstreckt.

10. Laufstreifen (1) gemäß einem der Ansprüche 8 oder 9, **dadurch gekennzeichnet, dass** der Rillengrund in einem Zweigrillenabschnitt (15, 16, 17, 18) gegenüber einem abseits des Zweigrillenabschnitts (15, 16, 17, 18) an den Zweigrillenabschnitt (15, 16, 17, 18) angrenzenden Rillengrund erhöht ist.

11. Laufstreifen (1) gemäß einem der Ansprüche 1 bis 10, **dadurch gekennzeichnet, dass** der Rillengrund an einer Mündung zwischen einem sein axial äußeres Ende (2a, 6a) auf der ersten Seite des Reifenäquators (8) aufweisenden schrägen Rillenabschnitt (2, 6) und einem sein axial äußeres Ende (3a, 7a) auf der zweiten Seite des Reifenäquators (8) aufweisenden schrägen Rillenabschnitt (3, 7) gegenüber einem abseits der Mündung an die Mündung angrenzenden Rillengrund erhöht ist.

12. Laufstreifen (1) gemäß einem der Ansprüche 10 oder 11, **dadurch gekennzeichnet, dass** der Rillengrund in den erhöhten Bereichen wenigstens 1,5 mm und höchstens mit einer Tiefe von 60% der vollen Profiltiefe unter einer Basisfläche (19) des Laufstreifens (1) verläuft.

13. Laufstreifen (1) gemäß einem der Ansprüche 10 bis 12, **dadurch gekennzeichnet, dass** die Bereiche erhöhten Rillengrundes auf einen zweiten mittleren Abschnitt (25) des Laufstreifens (1) beschränkt sind, der sich über 8% bis 24%, vorzugsweise über 12% bis 20% der axialen Breite der Bodenaufstandsfläche (23) erstreckt und den Reifenäquator (8) einschließt.

14. Laufstreifen (1) gemäß einem der Ansprüche 1 bis 13, **dadurch gekennzeichnet, dass** an der Basisfläche (19) parallel zu den schrägen Rillenabschnitten (2, 3, 4, 5, 6, 7) verlaufende Einschnitte (20) in dem Laufstreifen (1) ausgebildet sind.

15. Laufstreifen (1) gemäß Anspruch 14, **dadurch gekennzeichnet, dass** wenigstens einer der Einschnitte (20) eine maximale Tiefe von 70% bis 100% der vollen Profiltiefe, einen Einschnittgrund (21) und zwei Einschnittwände (22) mit zumindest einer zu der Basisfläche (19) beabstandeten lokalen Verkeilungsstruktur (26) aufweisen, wobei die Verkeilungsstruktur (26) durch zwei einander gegenüberliegende, korrespondierende, durchgehend gekrümmte Wandabschnitte der Einschnittwände (22a, 22b) gebildet ist und wobei unstrukturierte Flächen der Einschnittwände (22a, 22b) an die durchgehend gekrümmten Wandabschnitte angrenzen, wobei die Verkeilungsstruktur (26) kreissegmentförmig, insbesondere halbkreisförmig, ausgeführt ist und sich aus einer kuppelförmig ausgebauchten, inneren Strukturzone (27) und einer diese U-förmig umlaufenden, entgegengesetzt zur inneren Strukturzone ausgebauchten, äußeren Strukturzone (28) mit zur Basisfläche (19) weisenden U-Schenkeln zusammensetzt, sodass der durchgehend gekrümmte Wandabschnitt der einen Einschnittwand (22a) einen U-förmigen Vorsprung und der durchgehend gekrümmte Wandabschnitt der anderen Einschnittwand (22b) einen in den U-förmigen Vorsprung hineinragenden kuppelförmigen Vorsprung mitbegrenzt.

## Claims

1. Tread (1) for a vehicle tyre, wherein a plurality of oblique groove sections (2, 3, 4, 5, 6, 7) are formed in the tread (1), wherein each of the oblique groove sections (2, 3, 4, 5, 6, 7) runs forwards in the circumferential direction from an axially outer end (2a, 3a, 4a, 5a, 6a, 7a) to an end (2b, 3b, 4b, 5b, 6b, 7b) lying closer to a tyre equator (8), wherein at least one oblique groove section (2, 6) which has its axially outer end (2a, 6a) on a first side of the tyre equator (8) opens within a ground contact area (23) into an oblique groove section (3, 7) which has its axially outer end (3a, 7a) on a second side of the tire equator (8), and at least one further oblique groove section (4) which has its axially outer end (4a) on the first side of the tyre equator (8) has its end (4b) lying closer to the tyre equator within the ground contact area (23) and does not open into any oblique groove section which has its axially outer end on the second side of the tyre equator (8),
**characterized**
**in that** two of three of the oblique groove sections (2, 4, 6) which have their axially outer end (2a, 4a, 6a) on the first side of the tyre equator (8) open into oblique groove sections (3, 7) which have their axially outer ends (3a, 7a) on the second side of the tyre equator (8).

2. Tread (1) according to Claim 1, **characterized in that** at least one oblique groove section (5) which has its axially outer end (5a) on the second side of the tyre equator (8) has its end (4b) lying closer to the tyre equator within the ground contact area (23) and does not open into any oblique groove section which has its axially outer end on the first side of the tyre equator (8).

3. Tread (1) according to either of Claims 1 or 2, **characterized in that** an end (2b, 3b, 4b, 5b, 6b, 7b), lying closer to the tyre equator (8), of each oblique groove section (2, 3, 4, 5, 6, 7) is arranged in a first central section (24) of the tread (1), which central section has an axial width of from 5% to 15%, preferably of from 5% to 12% of the width of the ground contact area (23) and includes the tyre equator (8).

4. Tread (1) according to one of Claims 1 to 3, **characterized in that** at least one of two and at most three of four, preferably two of three, of the oblique groove sections (3, 5, 7) which have their axially outer end (3a, 5a, 7a) on the second side of the tyre equator (8) open into oblique groove sections (2, 6) which have their axially outer ends (2a, 6a) on the first side of the tyre equator (8).

5. Tread (1) according to one of Claims 1 to 4, **characterized in that** every second to every fourth, preferably every third, oblique groove section (2) which has its axially outer end (2a) on the first side of the tyre equator (8) intersects the tyre equator (8), and/or **in that** every second to every fourth, preferably every third, oblique groove section (3) which has its axially outer end (3a) on the second side of the tire equator (8) intersects the tyre equator (8).

6. Tread (1) according to Claim 5, **characterized in that** the oblique groove sections (2, 3) which intersect the tyre equator (8) intersect the tyre equator at full tread depth.

7. Tread (1) according to one of Claims 1 to 6, **characterized in that** profile blocks (9, 10, 11, 12, 13, 14) are arranged between the oblique groove sections (2, 3, 4, 5, 6, 7), wherein an end (4b), lying closer to the tyre equator (8), of an oblique groove section (4), which has its axially outer end (4a) on the first side of the tyre equator (8) and does not open into any oblique groove section which has its axially outer end on the second side of the tyre equator (8), is spaced apart from further oblique groove sections (2, 3, 6, 7) by in each case at least one tread bar width, and/or wherein an end (5b), lying closer to the tyre equator (8), of an oblique groove section (5), which has its axially outer end (5a) on the second side of the tyre equator (8) and does not open into any oblique groove section which has its axially outer end on the first side of the tyre equator (8), is spaced apart from further oblique groove sections (2, 3, 6, 7) by in each case at least one tread bar width.

8. Tread (1) according to Claim 7, **characterized in that**, with respect to the oblique groove section (4) which has its axially outer end (4a) on the first side of the tyre equator (8) and does not open into any oblique groove section which has its axially outer end on the second side of the tyre equator (8), a first branching groove section (15) branching off from an oblique groove section (3) which has its axially outer end (3a) on the second side of the tyre equator (8) is formed in the tread (1), wherein the first branching groove section (15) extends by 30% to 80% of a tread bar width in the direction of the end (4b), lying closer to the tyre equator (8), of the oblique groove portion (4) which has its axially outer end (4a) on the first side of the tyre equator (8), and/or, with respect to the oblique groove section (5) which has its axial outer end (5a) on the second side of the tyre equator (8) and does not open into any oblique groove section which has its axially outer end on the first side of the tyre equator (8), a second branching groove section (16) which branches off from an oblique groove portion (2) which has its axially outer end (2a) on the first side of the tyre equator (8) is formed in the tread (1), wherein the second branching groove section (16) extends by 30% to 80% of a tread bar width in the direction of the end (5b), lying closer to the tyre equator (8), of the oblique groove portion (5) which has its axially outer end (5a) on the second side of the tyre equator (8).

9. Tread (1) according to either of Claims 7 or 8, **characterized in that** a third branching groove section (17) is connected to the end (4b), lying closer to the tyre equator (8), of that oblique groove section (4) which has its axially outer end (4a) on the first side of the tyre equator and does not open into any oblique groove section which has its axially outer end on the second side of the tyre equator (8), wherein the third branching groove section (17) extends by 30% to 80% of a tread bar width in the direction of an end (7b), lying closer to the tyre equator, of an oblique groove section (7) which has its axially outer end (7a) on the second side of the tyre equator, and/or **in that** a fourth branching groove section (18) is connected to the end (5b), lying closer to the tyre equator (8) of that oblique groove section (5) which has its axially outer end (5a) on the second side of the tyre equator (8) and does not open into any oblique groove section which has its axially outer end on the first side of the tyre equator (8), wherein the fourth branching groove section (18) extends by 30% to 80% of a tread bar width in the direction of an end (6b), lying closer to the tyre equator (8), of an oblique groove portion (6) which has its axially outer end (6a) on the first side of the tire equator (8).

10. Tread (1) according to either of Claims 8 or 9, **characterized in that** the groove bottom in a branching groove section (15, 16, 17, 18) is elevated compared to a groove bottom which is adjacent to the branching groove section (15, 16, 17, 18) away from the branching groove section (15, 16, 17, 18).

11. Tread (1) according to one of Claims 1 to 10, **characterized in that** the groove bottom is elevated at an outlet between an oblique groove section (2, 6) which has its axially outer end (2a, 6a) on the first side of the tyre equator (8) and an oblique groove section (3, 7) which has its axially outer end (3a, 7a) on the second side of the tyre equator (8), compared to a groove bottom which is adjacent to the outlet away from the outlet.

12. Tread (1) according to either of Claims 10 or 11, **characterized in that** the groove bottom in the elevated areas runs at at least 1.5 mm and at most with a depth of 60% of the full profile depth under a bottom surface (19) of the tread (1).

13. Tread (1) according to one of Claims 10 to 12, **characterized in that** the regions of elevated groove bottom are limited to a second central section (25) of the tread (8), which extends over 8% to 24%, preferably over 12% to 20%, of the axial width of the ground contact area (23) and includes the tyre equator (1).

14. Tread (1) according to one of Claims 1 to 13, **characterized in that** sipes (20) which run on the bottom surface (19) parallel to the oblique groove sections (2, 3, 4, 5, 6, 7) are formed in the tread (1).

15. Tread (1) according to Claim 14, **characterized in that** at least one of the sipes (20) has a maximum depth of from 70% to 100% of the full profile depth, a sipe bottom (21), and two sipe walls (22) with at least one local wedging structure (26) which is spaced apart from the bottom surface (19), wherein the wedging structure (26) is formed by two wall sections, which lie opposite one another, correspond and are continuously curved, of the sipe walls (22a, 22b), and wherein unstructured surfaces of the sipe walls (22a, 22b) adjoin the continuously curved wall sections, wherein the wedging structure (26) is of circular segment-shaped, in particular semicircular, configuration and comprises an inner structure zone (27) which is bulged in a dome-shaped manner, and an outer structure zone (28) which runs around the former in a U-shaped manner and is bulged in an opposed manner with respect to the inner structure zone, with U-shaped limbs which point towards the bottom surface (19), with the result that the continuously curved wall portion of the one sipe wall (22a) delimits a U-shaped projection, and the continuously curved wall portion of the other sipe wall (22b) also delimits a dome-shaped projection which protrudes into the U-shaped projection.

## Revendications

1. Bande de roulement (1) pour un pneu de véhicule, plusieurs sections de rainures obliques (2, 3, 4, 5, 6, 7) étant réalisées dans la bande de roulement (1), chacune des sections de rainures obliques (2, 3, 4, 5, 6, 7) s'étendant depuis une extrémité axialement extérieure (2a, 3a, 4a, 5a, 6a, 7a) en direction circonférentielle vers l'avant jusqu'à une extrémité (2b, 3b, 4b, 5b, 6b, 7b) plus proche d'un équateur de pneu (8), au moins une section de rainure oblique (2, 6) présentant son extrémité axialement extérieure (2a, 6a) sur un premier côté de l'équateur de pneu (8) débouchant à l'intérieur d'une surface de contact avec le sol (23) dans une section de rainure oblique (3, 7) présentant son extrémité axialement extérieure (3a, 7a) sur un deuxième côté de l'équateur de pneu (8) et au moins une autre section de rainure oblique (4) présentant son extrémité axialement extérieure (4a) sur le premier côté de l'équateur de pneu (8) présentant son extrémité (4b) plus proche de l'équateur de pneu à l'intérieur de la surface de contact avec le sol (23) et ne débouchant pas dans une section de rainure oblique présentant son extrémité axialement extérieure sur le deuxième côté de l'équateur de pneu (8)
**caractérisé en ce que**
deux sur trois sections de rainures obliques (2, 4, 6) présentant leur extrémité axialement extérieure (2a, 4a, 6a) sur le premier côté de l'équateur de pneu (8) débouchent dans des sections de rainures obliques (3, 7) présentant leurs extrémités axialement extérieures (3a, 7a) sur le deuxième côté de l'équateur de pneu (8).

2. Bande de roulement (1) selon la revendication 1, **caractérisée en ce qu'**au moins une section de rainure oblique (5) présentant son extrémité axialement extérieure (5a) sur le deuxième côté de l'équateur de pneu (8) présente son extrémité (4b) plus proche de l'équateur de pneu à l'intérieur de la surface de contact avec le sol (23) et ne débouche pas dans une section de rainure oblique présentant son extrémité axialement extérieure sur le premier côté de l'équateur de pneu (8).

3. Bande de roulement (1) selon l'une quelconque des revendications 1 ou 2, **caractérisée en ce qu'**une extrémité (2b, 3b, 4b, 5b, 6b, 7b) plus proche de l'équateur de pneu (8) de chaque section de rainure oblique (2, 3, 4, 5, 6, 7) est agencée dans une première section centrale (24) de la bande de roulement (1) présentant une largeur axiale de 5 % à 15 %, de préférence de 5 % à 12 % de la largeur de la surface de contact avec le sol (23) et incluant l'équateur de pneu (8).

4. Bande de roulement (1) selon l'une quelconque des revendications 1 à 3, **caractérisée en ce qu'**au moins une sur deux et au plus trois sur quatre, de préférence deux sur trois, des sections de rainures obliques (3, 5, 7) présentant leur extrémité axialement extérieure (3a, 5a, 7a) sur le deuxième côté de l'équateur de pneu (8) débouchent dans des sections de rainures obliques (2, 6) présentant leurs extrémités axialement extérieures (2a, 6a) sur le premier côté de l'équateur de pneu (8).

5. Bande de roulement (1) selon l'une quelconque des revendications 1 à 4, **caractérisée en ce que** chaque deuxième à chaque quatrième, de préférence chaque troisième, section de rainure oblique (2) présentant son extrémité axialement extérieure (2a) sur le premier côté de l'équateur de pneu (8) coupe l'équateur de pneu (8) et/ou **en ce que** chaque deuxième à chaque quatrième, de préférence chaque troisième, section de rainure oblique (3) présentant son extrémité axialement extérieure (3a) sur le deuxième côté de l'équateur de pneu (8) coupe l'équateur de pneu (8).

6. Bande de roulement (1) selon la revendication 5, **caractérisée en ce que** les sections de rainures obliques (2, 3) coupant l'équateur de pneu coupent l'équateur de pneu (8) à la profondeur de profil totale.

7. Bande de roulement (1) selon l'une quelconque des revendications 1 à 6, **caractérisée en ce que** des blocs de profil (9, 10, 11, 12, 13, 14) sont agencés entre les sections de rainures obliques (2, 3, 4, 5, 6, 7), une extrémité (4b) plus proche de l'équateur de pneu (8) d'une section de rainure oblique (4) présentant son extrémité axialement extérieure (4a) sur le premier côté de l'équateur de pneu (8) qui ne débouche pas dans une section de rainure oblique présentant son extrémité axialement extérieure sur le deuxième côté de l'équateur de pneu (8), étant éloignée d'autres sections de rainures obliques (2, 3, 6, 7) respectivement d'au moins une largeur de bloc de profil, et/ou une extrémité (5b) plus proche de l'équateur de pneu (8) d'une section de rainure oblique (5) présentant son extrémité axiale extérieure (5a) sur le deuxième côté de l'équateur de pneu (8), qui ne débouche pas dans une section de rainure oblique présentant son extrémité axiale extérieure sur le premier côté de l'équateur de pneu (8), étant éloignée d'autres sections de rainure obliques (2, 3, 6, 7) respectivement d'au moins une largeur de bloc de profil.

8. Bande de roulement (1) selon la revendication 7, **caractérisée en ce que** vers la section de rainure oblique (4) présentant son extrémité axialement extérieure (4a) sur le premier côté de l'équateur de pneu (8), qui ne débouche pas dans une section de rainure oblique présentant son extrémité axialement extérieure sur le deuxième côté de l'équateur de pneu (8), une première section de rainure en dérivation (15) dérivant à partir d'une section de rainure oblique (3) présentant son extrémité axialement extérieure (3a) sur le deuxième côté de l'équateur de pneu (8) est réalisée dans la bande de roulement (1), la première section de rainure en dérivation (15) s'étendant de 30 % à 80 % d'une largeur de bloc de profil en direction de l'extrémité (4b) plus proche de l'équateur de pneu (8) de la section de rainure oblique (4) présentant son extrémité axialement extérieure (4a) sur le premier côté de l'équateur de pneu (8) et/ou **en ce que** vers la section de rainure oblique (5) présentant son extrémité axialement extérieure (5a) sur le deuxième côté de l'équateur de pneu (8), qui ne débouche pas dans une section de rainure oblique présentant son extrémité axialement extérieure sur le premier côté de l'équateur de pneu (8), une deuxième section de rainure en dérivation (16) dérivant à partir d'une section de rainure oblique (2) présentant son extrémité axialement extérieure (2a) sur le premier côté de l'équateur de pneu (8) est réalisée dans la bande de roulement (1), la deuxième de rainure en dérivation (16) s'étendant de 30 % à 80 % d'une largeur de bloc de profil en direction l'extrémité (5b) plus proche de l'équateur de pneu (8) de la section de rainure oblique (5) présentant son extrémité axialement extérieure (5a) sur le deuxième côté de l'équateur de pneu (8).

9. Bande de roulement (1) selon l'une quelconque des revendications 7 ou 8, **caractérisée en ce qu'**une troisième section de rainure en dérivation (17) est reliée à l'extrémité (4b) plus proche de l'équateur de pneu (8) de la section de rainure oblique (4) présentant son extrémité axialement extérieure (4a) sur le premier côté de l'équateur de pneu, qui ne débouche pas dans une section de rainure oblique présentant son extrémité axialement extérieure sur le deuxième côté de l'équateur de pneu (8), la troisième section de rainure en dérivation (17) s'étendant de 30 % à 80 % d'une largeur de bloc de profil en direction d'une extrémité (7b) plus proche de l'équateur de pneu d'une section de rainure oblique (7) présentant son extrémité axialement extérieure (7a) sur le deuxième côté de l'équateur de pneu et/ou **en ce qu'**une quatrième section de rainure en dérivation (18) est reliée à l'extrémité (5b) plus proche de l'équateur de pneu (8) de la section de rainure oblique (5) présentant son extrémité axialement extérieure (5a) sur le deuxième côté de l'équateur de pneu (8), qui ne débouche pas dans une section de rainure oblique présentant son extrémité axialement extérieure sur le premier côté de l'équateur de pneu (8), la quatrième section de rainure en dérivation (18) s'étendant de 30 % à 80 % d'une largeur de bloc de profil en direction d'une extrémité (6b) plus proche de l'équateur de pneu (8) d'une section de rainure oblique (6) présentant son extrémité axialement extérieure (6a) sur le premier côté de l'équateur de pneu (8).

10. Bande de roulement (1) selon l'une quelconque des revendications 8 ou 9, **caractérisée en ce que** le fond de rainure est surélevé dans une section de rainure en dérivation (15, 16, 17, 18) par rapport à un fond de rainure adjacent à la section de rainure en dérivation (15, 16, 17, 18) à l'écart de la section de rainure en dérivation (15, 16, 17, 18).

11. Bande de roulement (1) selon l'une quelconque des revendications 1 à 10, **caractérisée en ce que** le fond de rainure est surélevé au niveau d'une embouchure entre une section de rainure oblique (2, 6) présentant son extrémité axialement extérieure (2a, 6a) sur le premier côté de l'équateur de pneu (8) et une section de rainure oblique (3, 7) présentant son extrémité axialement extérieure (3a, 7a) sur le deuxième côté de l'équateur de pneu (8), par rapport à un fond de rainure adjacent à l'embouchure à l'écart de l'embouchure.

12. Bande de roulement (1) selon l'une quelconque des revendications 10 ou 11, **caractérisée en ce que** le fond de rainure s'étend dans les zones surélevées au moins 1,5 mm et au plus avec une profondeur de 60 % de la profondeur de profil totale sous une surface de base (19) de la bande de roulement (1).

13. Bande de roulement (1) selon l'une quelconque des revendications 10 à 12, **caractérisée en ce que** les zones de fond de rainure surélevé sont limitées à une deuxième section centrale (25) de la bande de roulement (1) qui s'étend sur 8 % à 24 %, de préférence sur 12 % à 20 % de la largeur axiale de la surface de contact avec le sol (23) et qui inclut l'équateur de pneumatique (8).

14. Bande de roulement (1) selon l'une quelconque des revendications 1 à 13, **caractérisée en ce que** des entailles (20) s'étendant parallèlement aux sections de rainures obliques (2, 3, 4, 5, 6, 7) sont réalisées dans la bande de roulement (1) au niveau de la surface de base (19).

15. Bande de roulement (1) selon la revendication 14, **caractérisée en ce qu'**au moins une des entailles (20) présente une profondeur maximale de 70 % à 100 % de la profondeur de profil totale, un fond d'entaille (21) et deux parois d'entaille (22) avec au moins une structure de calage locale (26) espacée de la surface de base (19), la structure de calage (26) étant formée par deux sections de paroi opposées l'une à l'autre, correspondantes, incurvées en continu des parois d'entaille (22a, 22b), et des surfaces non structurées des parois d'entaille (22a, 22b) étant adjacentes aux sections de paroi incurvées en continu, la structure de calage (26) étant conçue en forme de segment de cercle, notamment en forme de demi-cercle, et se composant d'une zone de structure intérieure (27) bombée en forme de coupole et d'une zone de structure extérieure (28) entourant celle-ci en forme de U, bombée à l'opposé de la zone de structure intérieure, avec des branches de U orientées vers la surface de base (19), de telle sorte que la section de paroi incurvée en continu de l'une des parois d'entaille (22a) délimite une saillie en forme de U et la section de paroi incurvée en continu de l'autre paroi d'entaille (22b) délimite une saillie en forme de coupole pénétrant dans la saillie en forme de U.
